Europäisches Patentamt

European Patent Office

Office européen des brevets

(11) Publication number: **0 382 872 B1**

# EUROPEAN PATENT SPECIFICATION

(45) Date of publication of patent specification: **18.05.94**   (51) Int. Cl.5: **F16F 15/12, F02D 41/14**

(21) Application number: **89102747.6**

(22) Date of filing: **17.02.89**

(54) **Damping oscillations in two mass flywheel drive system.**

(43) Date of publication of application:
**22.08.90 Bulletin 90/34**

(45) Publication of the grant of the patent:
**18.05.94 Bulletin 94/20**

(84) Designated Contracting States:
**DE FR GB**

(56) References cited:
**EP-A- 0 273 177**
**DE-A- 3 511 432**
**FR-A- 2 598 765**

**PATENT ABSTRACTS OF JAPAN, vol. 8, no. 195 (M-323)[1632], 7th September 1984;& JP-A-59 85 443 (TOYOTA JIDOSHA K.K.) 17-05-1984**

**PATENT ABSTRACTS OF JAPAN, vol. 9, no. 63 (M-365)[1786], 20th March 1985;& JP-A-59 196 950 (MITSUBISHI JIDOSHA KOGYO K.K.) 08-11-1984**

**CONFERENCE RECORD OF THE 1988 IEEE INDUSTRY APPLICATIONS SOCIETY ANNUAL MEETING, Pittsburgh, Pennsylvania, 2nd - 7th October 1988, part I, pages 363-368, IEEE Catalog no. 88CH2565-0; R.D. LORENZ et al.:**

**"High resolution velocity estimation for all digital, AC servo drives"**

**PATENT ABSTRACTS OF JAPAN, vol. 10, no. 96 (M-469)[2153], 12th April 1986;& JP-A-60 233 354 (TOYOTA JIDOSHA K.K.) 20-11-1985**

(73) Proprietor: **ROBERT BOSCH GMBH**
**Postfach 30 02 20**
**D-70442 Stuttgart(DE)**

(72) Inventor: **Birk, Manfred**
**Oberbrinnweg 8/2**
**D-7032 Sindelfingen(DE)**
Inventor: **Sautter, Wilfried**
**Waldstrasse 29**
**D-7257 Ditzingen 4(DE)**
Inventor: **Kull, Herman**
**Novalisstaffel 1**
**D-7000 Stuttgart 10(DE)**
Inventor: **Küttner, Thomas**
**Lindenbachstrasse 69**
**D-7000 Stuttgart 31(DE)**

EP 0 382 872 B1

**Description**

The present invention relates to an arrangement for removing unwanted torsional vibrations in the drive train of an internal combustion engine. The ignition systems of internal combustion engines involve a strong ripple in rotational speed, which, when idling and also when driving, can lead to unpleasant gear noise. To cancel these vibrations, and thus to damp this gear noise, there has been proposed a two mass flywheel. This comprises two flywheel masses which are coupled together vi a resilient and damping elements. The masses are constituted by a primary mass, which is secured to the crankshaft and carries the starter ring gear, and a secondary mass, which is mounted on the primary mass by a ball bearing arrangement. Between the two masses is arranged a multi-stage torsion damper, with a spring and friction system corresponding to a conventional entrainer disc. Under certain operating conditions the two mass flywheel is excited to self oscillation, which can also lead to unpleasant vibration effects (especially when idling).

The Applicant has previously proposed an arrangement for suppressing self-oscillations in vehicles with a conventional drive train, e.g. damping by means of electronic feedback in diesel vehicles with E.D.C. (Electronic Diesel Control). By means of measurement of the engine speed, the natural oscillation in the drive train is recognised and, by means of a band-pass filter, control is effected to damp the vibrations by controlling the amount of fuel supply or another equivalent input, e.g. the injection timing.

According to the present invention there is provided an arrangement according to claim 1 for damping unwanted oscillations in the output of an internal combustion engine.

An arrangement for damping self-oscillations is known from Patent Abstracts of Japan, vol. 8, no. 195 (M-323) [1632]. This document shows a devic for reducing torque fluctuation at or near resonance of a two mass flywheel. This device measures the rotational speeds of each of the flywheel masses, calculates the difference and, when this difference approches the values at which resonanc occurs, causes an increase in fuel to the actuator to change the engine speed and hence avoid the resonance of the flywheel masses. This arrangement requires two angular velocity sensors.

The present invention seeks to overcome the above disadvantage.

In a preferred arrangement the difference signal is obtained from a circuit which calculates the difference between an estimated signal representing the angular velocity of the primary mass and an estimated signal representing the angular velocity of the secondary mass. The calculating circuit preferably comprises means for comparing the estimated primary mass angular velocity signal with an actual measured signal, whereby to adjust the circuit. An advantage of this arrangement is that only one angular velocity sensor is required, thus cutting down on costs. The single sensor permits continuous calibration of the calculating circuit. If desired, both angular velocities may be directly measured by respective sensors.

The present invention is based on the realization that natural oscillations of the primary mass relative to the secondary mass of the two mass flywheel should be avoided as much as possible. By measurement of the differential rotational speed, these self-oscillations can be determined. If the rotational speed is measured at both the primary mass and the secondary mass, then a subtraction of one speed from the other produces the differential rotational speed. By means of a band-pass filter, the self-oscillation component can be filtered out of the differential rotational speed signal, and used to permit a negative feedback by means of the amount of fuel supplied. Thus, by means of the negative feedback, the unwanted natural oscillations can be damped. This applies especially to the comparatively low natural frequencies of the two mass flywheel during idling (of the order of magnitude of 10 Hz).

To avoid the need for a second sensor or pick-up at the second mass the differential speed is preferably estimated, e.g. by means of an observer circuit. Input values for the observer are the control value in the main control path to the injection pump of the engine, e.g. a diesel engine, and the measured rotational speed at the primary mass. The model is adjusted by comparison of the measured primary rotational speed and the observed primary rotational speed.

From the main control path, the control value is taken which represents the signal from the position adjustment in the injection pump, which is actually measured. This is supplied to calculating or simulating means and, together with an angular velocity signal, is used to calculate the torque of the motor at the crankshaft. Thus the torque itself does not need to be directly measured.

The angular velocity of the secondary mass can be measured or because it is perhaps less expensive be observed in a Luenberger observer. This will be possible when the motor is in idle mode.

If the secondary angular velocity is measured then a damping of unwanted oscillations is also possible when there is a torque at the wheels, i.e when driving.

The observer circuit can be realised as an analog circuit or digitally in a computer.

The control function only works if at least two fuel injection times lie within one natural oscillation of the two mass flywheel. With a natural frequency of the two mass flywheel of 10 Hz the fuel injection frequency

2

must accordingly amount to at least 20 Hz, in order to achieve a vibration damping. At 720 revs/min a four-cylinder engine has a fuel injection frequency of 24 Hz and a six-cylinder engine has a frequency of 36 Hz; accordingly satisfactory control is possible. By comparison, a conventional drive train has a natural frequency of 40 to 70 Hz.

A preferred embodiment of the present invention will now be described, by way of example only, with reference to the accompanying drawings, of which:

Fig 1a is a schematic diagram of the drive train of a vehicle;

Fig.1b is a more detailed diagram corresponding to Fig.1a and showing an equivalent representation;

Fig.2a is an alternative schematic diagram of the vehicle drive train;

Fig.2b is an equivalent of Fig.2a; and

Fig. 3 is a diagram of an arrangement in accordance with the present invention, wherein a vehicle drive train is observed by a circuit including part of a simulator as shown in Fig.2.

Fig.1a is a schematic diagram of a vehicle drive train 10 incorporating a two mass flywheel 11 which acts as a mechanical low-pass filter. The flywheel comprises a primary mass 12 and a secondary mass 13 coupled via resilient and damping elements 14,15. The drive train also comprises a clutch 17, gears 18 and a differential 19 connected via shafts 20, 21 to rear wheels 22,23.

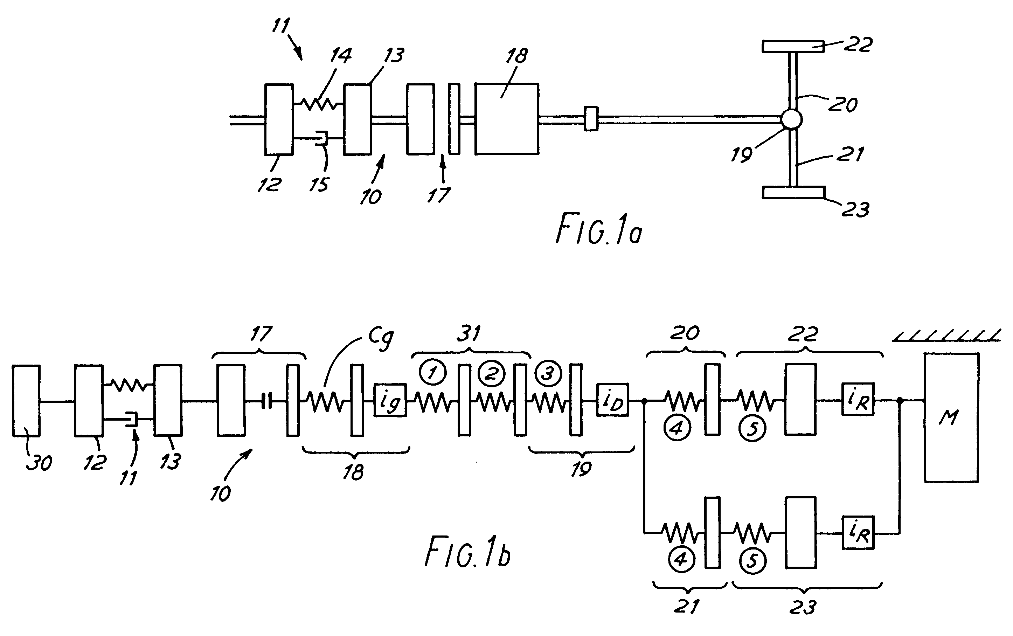

Fig.1b is a more detailed diagram and represents the various components in the drive train 10. Crankshaft 30 is connected to the primary mass 12 of the two mass flywheel 11. The gears are shown as having a moment of inertia $i_g$ and a spring constant $C_g$. A cardan shaft 31 is followed by a differential 19 with a moment of inertia iD.

These components combined have an equivalent spring constant $C_{1,2,3}$. The shafts to the wheels, and the wheels and tyres themselves, together have an equivalent spring constant $C_{4,5}$; each wheel, including the type, has a moment of inertia iR. The mass of the vehicle is represented by M, which also takes into account the resistance to motion and the moments of inertia of the front wheels.

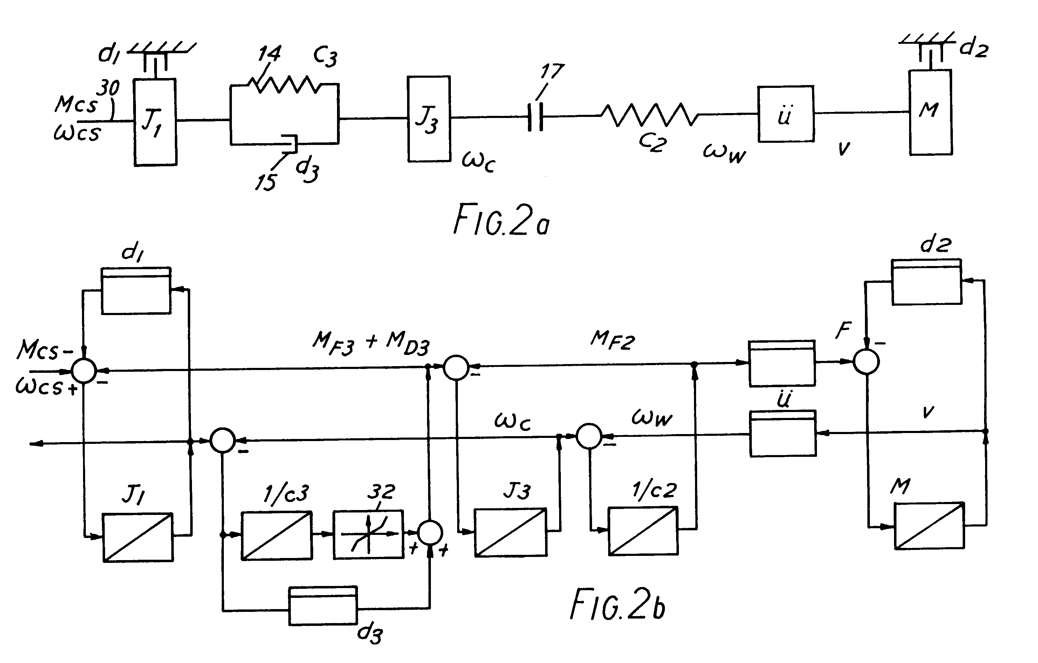

Figure 2a is a slightly simplified diagram of the drive train in which the part of the system extending from the clutch to the ground wheels has been approximated by a spring constant $C_2$ and a mass M. The spring constant is given by the formula.

$$c_2 = \left( \frac{1}{C_g} + \frac{i_g^2}{C_{1,2,3}} + \frac{i_g^2 i_d^2}{C_{4,5}} \right)^{-1}$$

The other parameters shown in the Figure are:

$M_{cs}$    - torque or crankshaft 30

$\omega cs$    - angular velocity of crankshaft

J1    - moment of inertia of crankshaft 30 and primary mass 12.

$\omega c$    - coupling angular velocity, that is the angular velocity at the output of the secondary mass 13.

J3    - Moment of inertia of secondary mass 13 and gears 18

$\omega w$    - wheel angular velocity

Figure 2b shows a circuit arrangement simulating the system of Fig.2a. Circuit 32 is a non-linearity circuit.

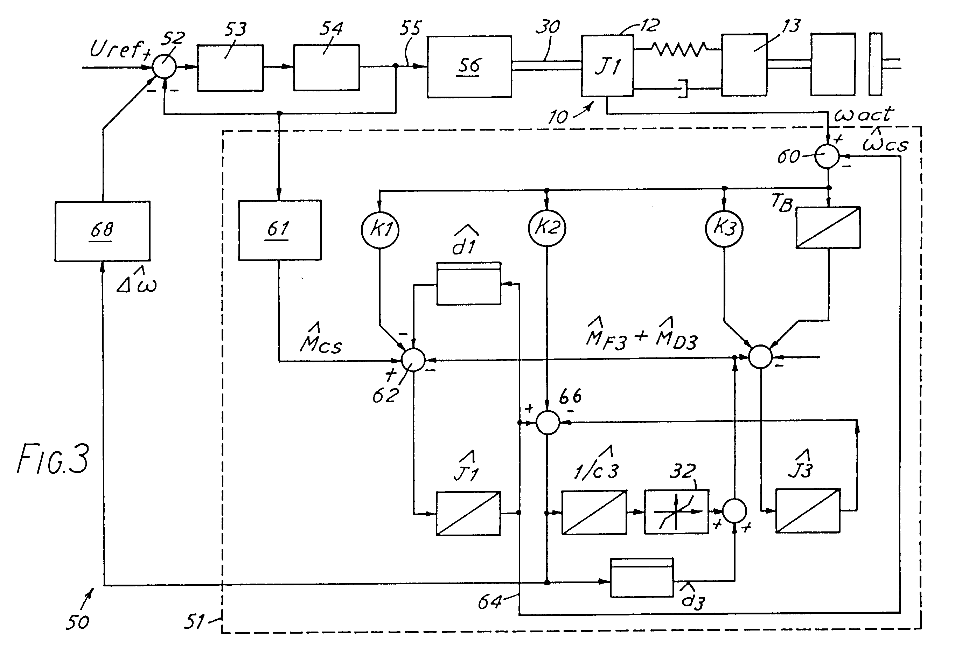

Fig.3 shows an arrangement 50 in accordance with the present invention in which a simulating means 51 is provided for estimating the difference between the angular velocities of the primary and secondary masses.

A desired control value Uref is fed to a first input of an adder circuit 52, the output of which is fed via position controllers and output stages 53 to adjusting magnet stage 54. The main control path 55 continues to the engine and injection pumps 56, the output of engine appearing at crackshaft 30.

The angular velocity $\omega act$ of the primary mass 12 is measured and the measured value is fed to a first input of an adder circuit 60.

The signal from the adjusting magnet stage 54, representing the position adjustment in the injection pump, is also fed to a negative input of the adder circuit 52 and to the input of an engine simulator or model 61 which calculates the torque at the crankshaft. This produces an output value $\hat{M}_{cs}$, where the cap "^" indicates a calculated or estimated value in contrast with a measured value. Signal $\hat{M}_{cs}$ is fed to an input of an adder circuit 62 which is part of a simulation arrangement corresponding generally to the left-hand side of Fig 2b. The arrangement shown in the broken line in Fig.3 is conveniently constituted by a Luenberger observer.

An output 64 of the simulator corresponds to the value $\omega$cs of the velocity of the primary mass calculated from $\hat{M}_{cs}$. Output 64 is connected to a second input of adder circuit 60 which compares actual and estimated values, thus enabling the model to be adjusted or calibrated.

K1,K2,K3 and $T_B$ are parameters of the Luenberger observer. The dynamic operation of the observer depends on these parameters. These parameters must be calculated by control theory methods. K1,K2 and K3 are constants. $T_B$ is the parameter of an integrator. The integrator will be steady when the angular velocity at the crankshaft (measured) is the same as the angular velocity $\omega$cs given by the observer.

The simulator 52 also produces a calculated or estimated value $\hat{\omega}$c of the secondary mass 13. This is fed to a negative input of an adder circuit 66, to a positive input of which is fed the estimated value $\hat{\omega}$cs of the primary mass 12. Thus the output signal of circuit 66 corresponds to the estimated difference between the angular velocities of the primary and secondary masses. This signal is fed to a bandpass filter and weighting circuit 68, the output of which is fed to a third and negative input of adder circuit 52. The central frequency of the passband of the filter is determined by the frequency of self-oscillation of the two mass flywheel 11.

Various modifications may be made to the above-described arrangement. For example, separate sensing means may be provided for measuring the angular velocities of both the primary and secondary masses. In this case, observer circuit 51 is simply replaced by a comparator.

Instead of controlling the amount of fuel supplied to the engine it is possible to control other variables, e.g. the timing of the injection of fuel into the engine.

## Claims

1. An arrangement for damping self-oscillations of a two mass flywheel in a vehicle having an internal combustion engine with fuel supply control means (52,53,54), and a drive train (10) comprising the flywheel (11) with primary (12) and secondary (13) masses, characterised in that an observer means (51) which receives a fuel supply signal and an actual measured velocity signal (W act) of the primary mass is provided for producing a signal ($\Delta$ $\hat{W}$) representing the difference between the angular velocities of the primary and secondary masses, the signal ($\Delta$ $\hat{W}$) being fed to the fuel supply control means (52,53,54) so as to damp the unwanted oscillations.

2. An arrangement according to claim 1 wherein the observer means (51) comprises means (60) for comparing the estimated primary mass angular velocity signal ($\hat{W}$ cs) with an actual measured signal ($\hat{W}$ act), and thereby adjusting the output of the observer means (51).

3. An arrangement according to any of claims 1 to 2 wherein the observer means (51) comprises engine simulating means (61) which receives a fuel supply signal from the control means (52,53,54) and from the output signal ($\hat{M}$ cs) of which is derived the estimated primary mass angular velocity signal ($\hat{W}$ cs).

4. An arrangement according to any of claims 1 to 3 wherein the observer means (51) comprises a circuit simulating at least part of the drive train (10) and means for applying thereto values representing control theory constants (K1,K2,K3,$T_B$).

5. An arrangement according to any of claims 1 to 4, wherein the output ($\Delta$ $\hat{W}$) of the observer means (51) is fed to a bandpass filter circuit (68) having a pass band centred on the self-oscillation frequency of the two mass flywheel (11).

6. An arrangement according to any preceding claim, wherein the fuel supply control means (52,53,54) controls the amount of fuel supplied to the engine.

7. An arrangement according to any of claim 1 to 6, wherein the fuel supply control means (52,53,54) controls the timing of the injection of fuel into the engine.

8. A method for damping self-oscillations of a two mass flywheel in a vehicle having an internal combustion engine with fuel supply control means (52,53,54), and a drive train (10) comprising the flywheel (11) with primary (12) and secondary (13) masses, the method being characterised in that observer means (51) which receives a fuel supply signal and an actual measured velocity signal ($\hat{W}$ act) produces a signal ($\Delta$ $\hat{W}$) representing the difference between the angular velocities of the primary and secondary masses, the signal ($\Delta$ $\hat{W}$) is used to control the fuel supply to the engine, thereby damping

4

the unwanted oscillations.

**Patentansprüche**

1. Eine Vorrichtung zur Dämpfung von Eigenschwingungen eines Zwei-Massen-Schwungrads in einem Fahrzeug, das über einen Verbrennungsmotor mit einem Kraftstoffzufuhrsteuerungsmittel (52,53,54) und einen Antriebsstrang (10) verfügt, der das Schwungrad (11) mit der Primärmasse (12) und der Sekundärmasse (13) umfaßt, dadurch gekennzeichnet, daß zur Erzeugung eines Signals ($\Delta\widehat{W}$), das die Differenz zwischen den Winkelgeschwindigkeiten der primär- und der Sekundärmasse darstellt, ein Beobachtermittel (51) bereitgestellt wird, das ein Kraftstoffzufuhrsignal und ein tatsächlich gemessenes Geschwindigkeitssignal ($W_{act}$) der Primärmasse empfängt, wobei das Signal ($\Delta\widehat{W}$) dem Kraftstoffzufuhr-steuerungsmittel (52,53,54) zugeleitet wird, um die unerwünschten Schwingungen zu dämpfen.

2. Eine Vorrichtung nach Anspruch 1, wobei das Beobachtermittel (51) ein Mittel (60) zum Vergleich des Primärmassen-Winkelgeschwindigkeitssignals ($\widehat{W}_{cs}$) mit einem tatsächlich gemessenen Signal ($\widehat{W}_{act}$) und damit zum Einstellen der Ausgabe des Beobachtermittels (51) umfaßt.

3. Eine Vorrichtung nach einem der Ansprüche 1 bis 2, wobei das Beobachtermittel (51) ein Motorsimulationsmittel (61) umfaßt, das ein Kraftstoffzufuhrsignal von dem Steuerungsmittel (52,53,54) empfängt und von dessen Ausgangssignal ($\widehat{M}_{cs}$) das geschätzte Primärmassen-Winkelgeschwindigkeitssignal ($\widehat{W}_{cs}$) abgeleitet wird.

4. Eine Vorrichtung nach einem der Ansprüche 1 bis 3, wobei das Beobachtermittel (51) einen Schaltkreis, der zumindest einen Teil des Antriebsstrangs (10) simuliert, und ein Mittel zur Anwendung von Werten hierauf umfaßt, die Konstanten (K1,K2,K3,$T_B$) der Steuertheorie darstellen.

5. Eine Vorrichtung nach einem der Ansprüche 1 bis 4, wobei der Ausgang ($\Delta\widehat{W}$) des Beobachtermittels (51) einem Bandpaßfilterschaltkreis (68) zugeleitet wird, das einen Durchlaßbereich aufweist, der auf die Eigenschwingungsfrequenz des Zwei-Massen-Schwungrades (11) zentriert ist.

6. Eine Vorrichtung nach einem der obigen Ansprüche, wobei das Kraftstoffzufuhrsteuerungsmittel (52,53,54) die Menge des Kraftstoffs steuert, die dem Motor zugeführt wird.

7. Eine Vorrichtung nach einem der Ansprüche 1 bis 6, wobei das Kraftstoffzufuhrsteuerungsmittel (52,53,54) den Zeitpunkt der Einspritzung des Kraftstoffs in den Motor steuert.

8. Ein Verfahren zur Dämpfung von Eigenschwingungen eines Zwei-Massen-Schwungrades in einem Fahrzeug, das über einen Verbrennungsmotor mit einem Kraftstoffzufuhrsteuerungsmittel (52,53,54) und einen Antriebsstrang (10) verfügt, der das Schwungrad (11) mit der Primärmasse (12) und der Sekundärmasse (13) umfaßt, wobei das Verfahren dadurch gekennzeichnet ist, daß ein Beobachtermittel (51), das ein Kraftstoffzufuhrsignal und ein tatsächlich gemessenes Geschwindigkeitssignal ($\widehat{W}_{act}$) empfängt, ein Signal ($\Delta\widehat{W}$) erzeugt, das die Differenz zwischen den Winkelgeschwindigkeiten der Primär- und der Sekundärmasse darstellt, wobei das Signal ($\Delta\widehat{W}$) dazu dient, die Kraftstoffzufuhr zum Motor zu steuern und dadurch die unerwünschten Schwingungen zu dämpfen.

**Revendications**

1. Dispositif d'amortissement des auto-oscillations d'un volant d'inertie à deux masses dans un véhicule comportant un moteur à combustion interne muni d'un moyen de commande d'alimentation de carburant (52, 53, 54), et un train d'entraînement (10) comprenant le volant d'inertie (11) muni d'une masse primaire (12) et d'une masse secondaire (13), caractérisé en ce qu'un moyen observateur (51) recevant un signal d'alimentation de carburant et un signal de vitesse réelle mesurée $W_{act}$) de la masse primaire, est utilisé pour produire un signal ($\Delta\widehat{W}$) représentant la différence entre les vitesses angulaires de la masse primaire et de la masse secondaire, le signal ($\Delta\widehat{W}$) étant appliqué au moyen de commande d'alimentation de carburant (52, 53, 54) pour amortir les oscillations indésirables.

2. Dispositif selon la revendication 1, caractérisé en ce que le moyen observateur (51) comprend un moyen (60) pour comparer le signal de vitesse angulaire estimé de la masse primaire ($\widehat{W}_{cs}$) à un signal

réel mesuré ($\widehat{W}_{act}$), et pour régler ainsi le niveau de sortie du moyen observateur (51).

3. Dispositif selon l'une quelconque des revendications 1 ou 2, caractérisé en ce que le moyen observateur (51) comprend un moyen de simulation de moteur (61) qui reçoit un signal d'alimentation de carburant du moyen de commande (52, 53, 54) et dont le signal de sortie ($\widehat{M}_{cs}$) sert à former le signal de vitesse angulaire estimée de la masse primaire ($\widehat{W}_{cs}$).

4. Dispositif selon l'une quelconque des revendications 1 à 3, caractérisé en ce que le moyen observateur (51) comprend un circuit simulant une partie au moins du train d'entraînement (10), et des moyens pour appliquer à celle-ci des valeurs représentant des constantes théoriques de commande (K1, K2, K3, $T_B$).

5. Dispositif selon l'une quelconque des revendications 1 à 4, caractérisé en ce que la sortie ($\Delta\widehat{W}$) du moyen observateur (51) est appliquée à un circuit de filtre passe-bande (68) présentant une bande passante centrée sur la fréquence d'auto-oscillation du volant d'inertie à deux masses (11).

6. Dispositif selon l'une quelconque des revendications précédentes, caractérisé en ce que le moyen de commande d'alimentation de carburant (52, 53, 54) commande la quantité de carburant fournie au moteur.

7. Dispositif selon l'une quelconque des revendications 1 à 6, caractérisée en ce que le moyen de commande d'alimentation de carburant (52, 53, 54) commande la régulation des temps d'injection du carburant dans le moteur.

8. Procédé d'amortissement des auto-oscillations d'un volant d'inertie à deux masses dans un véhicule comportant un moteur à combustion interne muni d'un moyen de commande d'alimentation de carburant (52, 53, 54), et un train d'entraînement (10) comprenant le volant d'inertie (11) muni d'une masse primaire (12) et d'une masse secondaire (13), le procédé étant caractérisé en ce que le moyen observateur (51) qui reçoit un signal d'alimentation de carburant et un signal de vitesse réelle mesurée ($\widehat{W}_{act}$), produit un signal ($\Delta\widehat{W}$) représentant la différence entre les vitesses angulaires de la masse primaire et de la masse secondaire, le signal ($\Delta\widehat{W}$) étant utilisé pour commander l'alimentation en carburant du moteur, de manière à amortir ainsi les oscillations indésirables.

FIG.1a

FIG.1b

FIG.2a

FIG.2b

EP 0 382 872 B1

FIG.3